# FASCICULE DE BREVET EUROPEEN

(11) **EP 3 244 341 B1**
(45) Date de publication et mention de la délivrance du brevet: **10.07.2019**
(21) Numéro de dépôt: 17169775.8
(22) Date de dépôt: 05.05.2017
(51) Int. Cl.: G06K 7/10

(54) **LECTEUR A COUPLAGE ELECTRO MAGNETIQUE**
LESEGERÄT MIT ELEKTROMAGNETISCHER KOPPLUNG
READER WITH ELECTROMAGNETIC COUPLING

(30) Priorité: 12.05.2016 FR 1654245
(43) Date de publication de la demande: 15.11.2017
(73) Titulaire: DURA Operating, LLC, Auburn Hills, MI 48326 (US)
(72) Inventeur: DURAND, Eric, 78430 Louveciennes (FR)
(74) Mandataire: Cabinet Laurent & Charras

(56) Documents cités:
- EP-A2- 1 148 437
- EP-A2- 1 840 790
- WO-A1-00/65551
- WO-A1-2009/058496
- FR-A1- 3 004 830

## Description

### DOMAINE TECHNIQUE

La présente invention concerne un lecteur à couplage électro magnétique dont les applications potentielles sont variées.

L'invention trouve une application particulièrement avantageuse pour les lecteurs intégrés dans un véhicule automobile permettant l'ouverture centralisée des portes.

### ART ANTERIEUR

Le couplage électro magnétique a été originellement développé pour réaliser de l'identification d'étiquettes (également appelés « tag » dans la littérature Anglo-Saxonne). Pour ce faire, un lecteur à couplage électro magnétique comporte une carte électronique munie d'une antenne apte à réaliser un couplage électro magnétique avec une antenne de l'étiquette de sorte à alimenter, sans fil, une puce disposée sur l'étiquette. L'antenne de l'étiquette renvoie alors au lecteur une information présente sur la puce de sorte à identifier l'étiquette. Cette technologie est connue sous l'acronyme RFID pour décrire une identification par radio fréquence (« Radio Frequency IDentification » dans la littérature Anglo-Saxonne). La technologie RFID permet de réaliser des applications de contrôle d'accès, de lecture de code-barres, de traçabilités des bagages ...

En outre, les développements récents visent à utiliser la technologie RFID pour réaliser des transactions de proximité.

Pour normaliser les échanges, une norme NFC (pour « Near Field Communication » dans la littérature Anglo-Saxonne) a été créée. Cette norme est définie par les documents ECMA 340, ETSI TS 102 190, ISO/CEI 14443 et ISO/IEC 18092 qui régissent les protocoles de modulation, de codage, les vitesses de transfert de données, les formats des trames, ainsi que les protocoles d'initialisation requis pour le contrôle de collisions.

Avec le développement de la technologie NFC, un lecteur à couplage électro magnétique peut désormais détecter la présence d'un téléphone intelligent (également appelé « SmartPhone » dans la littérature Anglo-Saxonne) comportant un mode de virtualisation d'une étiquette, également appelé HCE (pour «Host Card Emulation » dans la littérature Anglo-Saxonne). Ainsi, un lecteur à couplage électro magnétique peut contrôler l'ouverture d'un véhicule automobile par une clé intégrant une étiquette ou par un téléphone intelligent comportant un mode de virtualisation HCE.

L'invention concerne, plus particulièrement, la problématique de la réduction de la consommation d'un lecteur à couplage électro magnétique fonctionnant dans les deux modes de fonctionnement.

Un lecteur à couplage électro magnétique comporte classiquement :
- une antenne configurée pour réaliser le couplage électro magnétique,
- un module de gestion configuré pour moduler et transmettre un signal d'entrée sur ladite antenne, et pour démoduler et transmettre un signal de sortie réceptionné par ladite antenne, et
- un organe de supervision configuré pour générer ledit signal d'entrée et analyser ledit signal de sortie de sorte à organiser une communication sans fil.

Il est connu d'utiliser un organe de supervision comportant un mode d'endormissement dans lequel les fonctionnalités sont limitées. Par exemple, dans le mode d'endormissement, l'organe de supervision n'est pas capable de générer le signal d'entrée ou d'analyser le signal de sortie. Il s'ensuit que la consommation de l'organe de supervision est grandement limitée dans le mode d'endormissement. En outre, dans le mode d'endormissement, l'organe de supervision peut être réveillé par un signal de réveil connecté au module de gestion.

Un premier mode d'économie d'énergie consiste à utiliser une temporisation sur le module de gestion pour réveiller périodiquement l'organe de supervision. L'organe de supervision génère alors un signal d'entrée afin de détecter la présence d'un périphérique externe. Si aucun signal n'est reçu sur l'antenne en réponse au signal d'entrée, l'organe de supervision déduit qu'aucun périphérique externe n'est à portée de l'antenne et retourne dans le mode d'endormissement. Par exemple, dans un domaine éloigné, le document FR3004830 décrit un lecteur NFC comportant un mode d'endormissement destiné à réduire sa consommation.

Dans le cas contraire, une communication radiofréquence est mise en place, par exemple pour détecter si le périphérique externe possède les droits de déverrouillage d'un véhicule automobile. Ce premier mode d'économie d'énergie présente l'avantage de détecter tous les périphériques : étiquettes ou téléphones intelligents comportant un mode de virtualisation HCE. Cependant, le temps d'activation de l'organe de supervision est important pour générer le signal d'entrée et attendre le signal de sortie. Il s'ensuit que la consommation reste importante.

Pour diminuer encore la consommation, un second mode d'économie d'énergie permet au module de gestion de mesurer périodiquement l'impédance de l'antenne. En effet, un téléphone intelligent comportant un mode de virtualisation HCE peut créer un couplage électro magnétique sur l'antenne et modifier l'impédance de l'antenne. Le réveille de l'organe de supervision est alors effectué uniquement lorsqu'un téléphone intelligent comportant un mode de virtualisation HCE est effectivement détecté par le module de gestion. Ce second mode d'économie d'énergie réduit la consommation mais ne permet pas de détecter les étiquettes car leurs présences ne modifient pas suffisamment l'impédance de l'antenne du lecteur. Par exemple, dans un domaine éloigné, le document WO2009/058496 décrit un lecteur NFC avec un mode d'endormissement. Le réveil du lecteur NFC est assuré par une mesure de l'impédance de l'antenne de sorte à détecter la présence d'un périphérique.

En outre, pour ces deux modes d'économie d'énergie, il existe un risque de défaillance du lecteur à couplage électro magnétique qui apparait lorsque la transmission du signal de réveil est défectueuse entre le module de gestion et l'organe de supervision. En effet, le circuit peut être coupé physiquement ou sensible à des perturbations électromagnétiques.

Le problème technique de l'invention est d'obtenir un lecteur à couplage électro magnétique à consommation réduite, permettant de détecter une étiquette et un téléphone intelligent comportant un mode de virtualisation HCE, tout en limitant le risque de défaillance.

### EXPOSE DE L'INVENTION

Pour ressoude le problème technique, l'homme du métier aurait utilisé un composant intégrant les deux modes d'économie d'énergie, tel que le composant de référence CLCC663 de la société NXP®.

En outre, pour éviter les disfonctionnements sur le signal de réveil, l'homme du métier aurait dupliqué le signal de réveil et/ou il aurait amélioré la solidité ou le blindage du signal de réveil.

La présente invention vise à résoudre ce problème technique en utilisant un lecteur à couplage électro magnétique, intégré dans un véhicule automobile permettant l'ouverture centralisée des portes, intégrant le second mode d'économie d'énergie géré par le module de gestion et intégrant un autre mode d'économie d'énergie indépendant du module de gestion et configuré pour réveiller périodiquement l'organe de supervision.

A cet effet, l'invention concerne un lecteur à couplage électro magnétique comportant :
- une antenne configurée pour réaliser un couplage électro magnétique,
- un module de gestion configuré pour moduler et transmettre un signal d'entrée sur ladite antenne, et pour démoduler et transmettre un signal de sortie réceptionné par ladite antenne,
- un organe de supervision configuré pour générer ledit signal d'entrée et analyser ledit signal de sortie de sorte à organiser une communication sans fil,
- ledit organe de supervision comportant un mode d'endormissement configuré pour limiter la consommation d'énergie, un premier signal de réveil permettant de sortir ledit organe de supervision dudit mode d'endormissement, et
- un second signal de réveil commandé par une horloge configurée pour sortir ledit organe de supervision dudit mode d'endormissement à intervalles réguliers.

Par rapport au document FR3004830, l'invention se caractérise en ce que ledit lecteur à couplage électro magnétique est intégré dans un véhicule automobile permettant l'ouverture centralisée des portes, ledit module de gestion comportant en outre :
- un mode d'économie d'énergie consistant à mesurer, à intervalles réguliers, une impédance de ladite antenne afin de détecter une présence d'un périphérique autorisant un couplage électro magnétique, ledit premier signal de réveil étant activé par ledit module de gestion lorsqu'un périphérique est détecté.

L'invention permet ainsi de détecter, avec une faible quantité d'énergie, un téléphone intelligent comportant un mode de virtualisation HCE, par analyse de l'impédance de l'antenne. En outre, l'organe de supervision est réveillé périodiquement pour détecter la présence d'étiquettes.

De plus, le réveil périodique de l'organe de supervision est assuré par un dispositif indépendant du module de gestion : un second signal de réveil et une horloge. Selon l'invention, l'horloge et le second signal de réveil peuvent être intégrés dans l'organe de supervision ou implémentés sur une carte électronique supportant l'organe de supervision.

L'invention permet ainsi de résister à une défaillance du premier signal de réveil. En outre, lorsque le premier signal de réveil est défectueux, le lecteur à couplage électro magnétique continue de fonctionner avec des performances réduites, en utilisant uniquement les phases de réveils périodiques générées par l'horloge et le second signal de réveil.

Selon un mode de réalisation de l'invention, lesdits intervalles réguliers dudit second signal de réveil sont supérieurs auxdits intervalles réguliers dudit mode d'économie d'énergie. Ce mode de réalisation permet de limiter la consommation car l'organe de supervision consomme plus d'énergie que le module de gestion.

Selon un mode de réalisation de l'invention, lesdits intervalles réguliers dudit second signal de réveil présentent une période supérieure à 1s. De préférence, lesdits intervalles réguliers dudit second signal de réveil présentent une période sensiblement égale à 2s. Ce mode de réalisation permet d'obtenir un bon compromis entre le temps de détection et la consommation.

Selon un mode de réalisation de l'invention, ledit mode d'économie d'énergie présente une période d'attente et une période de détection. De préférence, ladite période d'attente est comprise entre 35 et 45 ms.

Encore plus préférentiellement, ladite période d'attente est sensiblement égale à 40 ms. De préférence, ladite période de détection est comprise entre 50 et 150 µs. Encore plus préférentiellement, ladite période de détection est sensiblement égale à 100 µs.

Ces valeurs particulières de configuration du mode d'économie d'énergie permettent d'obtenir un lecteur à couplage électro magnétique dont la consommation est inférieure à 1ma par heure.

Selon un mode de réalisation, ledit organe de supervision met en oeuvre le protocole NFC.

### DESCRIPTION SOMMAIRE DES FIGURES

La manière de réaliser l'invention ainsi que les avantages qui en découlent, ressortiront bien du mode de réalisation qui suit, donné à titre indicatif mais non limitatif, à l'appui des figures annexées dans lesquelles les figures 1 à 3 représentent :
- figure 1 : une représentation schématique d'un lecteur à couplage électro magnétique selon un premier mode de réalisation de l'invention ;
- figure 2 : une représentation schématique d'un lecteur à couplage électro magnétique selon un second mode de réalisation de l'invention ;
- figure 3 : une représentation temporelle du fonctionnement du module de gestion du lecteur à couplage électro magnétique de la figure 1 ; et
- figure 4 : une représentation temporelle du fonctionnement de l'organe de supervision du lecteur à couplage électro magnétique de la figure 1.

### DESCRIPTION DETAILLEE DE L'INVENTION

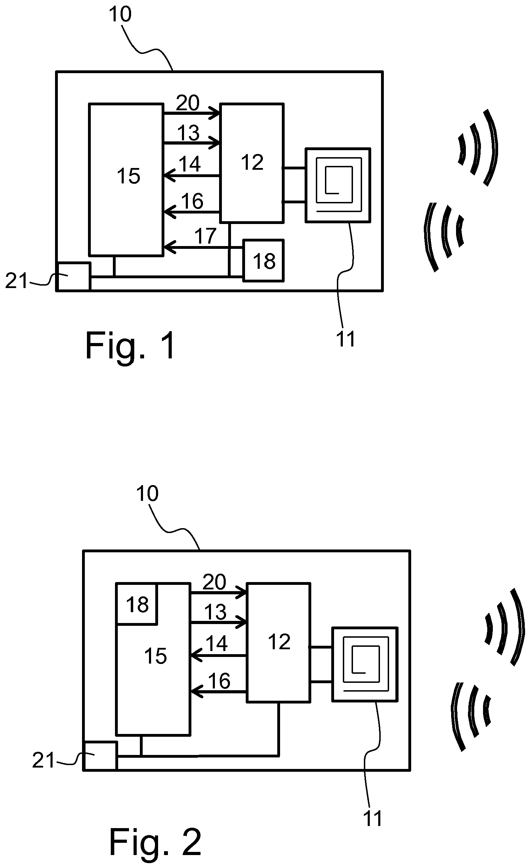

La figure 1 illustre un lecteur à couplage électro magnétique **10** comportant une antenne **11** connectée à un module de gestion **12.** L'antenne **11** est préférentiellement réalisée sous la forme d'une antenne patch présentant un substrat sur lequel est disposé un circuit d'un matériau conducteur. L'introduction d'un courant sur le matériau conducteur de l'antenne **11** créé un champ magnétique.

Le module de gestion **12** réalise une modulation du courant émis par l'antenne **11** de sorte à transmettre un signal d'entrée **13** reçu par le module de gestion **12.** Le module de gestion **12** analyse également les signaux reçu par l'antenne **11** et effectue une démodulation de sorte à obtenir un signal de sortie **14.**

Les signaux d'entrée **13** et de sortie **14** sont connectés à un organe de supervision **15** qui organise la communication sans fil. La communication peut utiliser tous les protocoles de communication par couplage électro magnétique possibles.

De préférence, le protocole de couplage électro magnétique de la technologie NFC est mis en oeuvre par l'organe de supervision **15.** L'organe de supervision **15** peut être un microcontrôleur, un microprocesseur, un ASIC (« Application-Specific Integrated Circuit » selon la littérature Anglo-Saxonne), un FPGA (« Field-Programmable Gate Array» selon la littérature Anglo-Saxonne), ou tout autre composant équivalent.

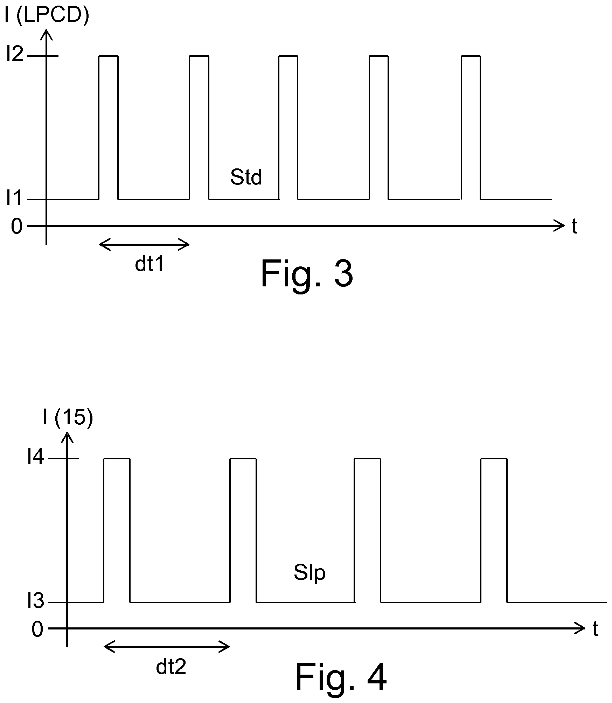

Le module de gestion **12** intègre un mode d'économie d'énergie **LPCD,** illustré sur la figure 3. De sorte à limiter la consommation générale de courant, le module de gestion **12** présente une période d'attente **Std** dans laquelle le module de gestion **12** utilise une faible quantité de courant **I1** et une période de détection dans laquelle le module de gestion **12** utilise une plus grande quantité de courant **I2.** Dans la période de détection, le module de gestion **12** mesure l'impédance de l'antenne **11** afin de déterminer si un périphérique externe applique un champ magnétique sur l'antenne **11.** Lorsqu'aucune modification de l'impédance de l'antenne **11** n'est détectée, un nouveau cycle comportant une période d'attente **Std** et une période de détection est réalisé. La période de ces cycles sans détection est notée **dt1**. Par exemple, les composants CLRC663, MFRC631, MFRC 630, SLRC610 de la société NPX® peuvent être utilisé comme module de gestion **12.**

La configuration précise de ces périodes de détection et d'attente **Std** permet d'obtenir un compromis efficace entre la réactivité de détection et la diminution de la consommation. De préférence, ladite période d'attente est comprise entre 35 et 45 ms. De préférence, ladite période d'attente est sensiblement égale à 40 ms. De préférence, ladite période de détection **Std** est comprise entre 50 et 150 µs. De préférence, ladite période de détection **Std** est sensiblement égale à 100 µs.

L'organe de supervision **15** présente également un mode d'endormissement **Slp,** illustré sur la figure 4. De sorte à limiter la consommation générale de courant, l'organe de supervision **15** présente une période d'endormissement **Slp** dans laquelle l'organe de supervision **15** utilise une faible quantité de courant **I3** et une période d'activation dans laquelle l'organe de supervision **15** utilise une plus grande quantité de courant **I4.** Dans la période d'activation, l'organe de supervision **15** émet un signal d'entrée **13** selon le protocole prédéfini et attend une réponse sur le signal de sortie **14.** Lorsqu'aucun signal de sortie **14** n'est reçu, l'organe de supervision **15** retourne dans la mode d'endormissement **Slp.**

Pour extraire l'organe de supervision **15** du mode d'endormissement **Slp,** un premier signal de réveil **16** est connecté entre le module de gestion **12** et l'organe de supervision **15** de sorte à réveiller l'organe de supervision **15** lorsque la présence d'un périphérique externe est détecté dans la période de détection du module de gestion **12.**

L'invention propose d'utiliser également un second signal de réveil **17** alimenté par une horloge **18** configurée pour réveiller l'organe de supervision **15** régulièrement. De préférence, la période **dt2** de réveil de l'organe de supervision **15** est supérieure à la période **dt1** d'activation du module de gestion **12.** De préférence, la période **dt2** de réveil de l'organe de supervision **15** est supérieure à 1s. Encore plus préférentiellement, la période **dt2** de réveil de l'organe de supervision **15** est sensiblement égale à 2s.

L'organe de supervision **15** transmet également un signal d'horloge **20** de sorte à cadencer les échanges entre l'organe de supervision **15** et le module de gestion **12.**

Pour finir, le lecteur à couplage électro magnétique **10** est connecté à une alimentation externe **21** de sorte à alimenter l'organe de supervision **15,** le module de gestion **12** et l'horloge **18.**

En variante, tel qu'illustré sur la figure 2, l'horloge **18** peut être intégrée à l'organe de supervision **15** sans changer l'invention. Dans ce mode de réalisation, le second signal de réveil **17** est un signal interne à l'organe de supervision **15.**

L'invention permet ainsi de détecter la présence d'une étiquette ou d'un téléphone intelligent comportant un mode de virtualisation HCE. Lorsque le périphérique externe correspond à un téléphone intelligent comportant un mode de virtualisation HCE, il est détecté rapidement par le module de gestion **12** en mesurant l'impédance de l'antenne **11.** En outre, une étiquette peut être détecté lorsque l'organe de supervision **15** est réveillé par l'horloge **18.**

De plus, le lecteur à couplage électro magnétique **10** de l'invention permet également de détecter un un téléphone intelligent comportant un mode de virtualisation HCE lorsque le premier signal de réveil **16** est inopérant.

## Revendications

1. Lecteur à couplage électro magnétique (10) comportant :
- une antenne (11) configurée pour réaliser un couplage électro magnétique,
- un module de gestion (12) configuré pour moduler et transmettre un signal d'entrée (13) sur ladite antenne (11), et pour démoduler et transmettre un signal de sortie (14) réceptionné par ladite antenne (11),
- un organe de supervision (15) configuré pour générer ledit signal d'entrée (13) et analyser ledit signal de sortie (14) de sorte à organiser une communication sans fil,
- ledit organe de supervision (15) comportant un mode d'endormissement (Slp) configuré pour limiter la consommation d'énergie, un premier signal de réveil (16) permettant de sortir ledit organe de supervision (15) dudit mode d'endormissement (Slp), et
- un second signal de réveil (17) commandé par une horloge (18) configurée pour sortir ledit organe de supervision (15) dudit mode d'endormissement à intervalles réguliers (dt2),
**caractérisé en ce que** ledit lecteur à couplage électro magnétique (10) est intégré dans un véhicule automobile permettant l'ouverture centralisée des portes, ledit module de gestion (12) comportant en outre :
- un mode d'économie d'énergie (LPCD) consistant à mesurer, à intervalles réguliers (dt1), une impédance de ladite antenne (11) afin de détecter une présence d'un périphérique autorisant un couplage électro magnétique, ledit premier signal de réveil (16) étant activé par ledit module de gestion (12) lorsqu'un périphérique est détecté.

2. Lecteur à couplage électro magnétique selon la revendication 1, dans lequel lesdits intervalles réguliers (dt2) dudit second signal de réveil (17) sont supérieurs auxdits intervalles réguliers (dt1) dudit mode d'économie d'énergie (LPCD).

3. Lecteur à couplage électro magnétique selon la revendication 1 ou 2, dans lequel lesdits intervalles réguliers (dt2) dudit second signal de réveil (17) présentent une période supérieure à 1s.

4. Lecteur à couplage électro magnétique selon l'une des revendications 1 à 3, dans lequel lesdits intervalles réguliers (dt2) dudit second signal de réveil (17) présentent une période sensiblement égale à 2s.

5. Lecteur à couplage électro magnétique selon l'une des revendications 1 à 4, dans lequel ledit mode d'économie d'énergie (LPCD) présente une période d'attente (Std) et une période de détection.

6. Lecteur à couplage électro magnétique selon la revendication 5, dans lequel ladite période d'attente (Std) est comprise entre 35 et 45 ms.

7. Lecteur à couplage électro magnétique selon la revendication 5 ou 6, dans lequel ladite période d'attente (Std) est sensiblement égale à 40 ms.

8. Lecteur à couplage électro magnétique selon l'une des revendications 5 à 7, dans lequel ladite période de détection est comprise entre 50 et 150 µs.

9. Lecteur à couplage électro magnétique selon l'une des revendications 5 à 8, dans lequel ladite période de détection est sensiblement égale à 100 µs.

10. Lecteur à couplage électro magnétique selon l'une des revendications 1 à 9, dans lequel ledit organe de supervision (15) met en oeuvre le protocole NFC.

## Patentansprüche

1. Lesegerät mit elektromagnetischer Kopplung (10), umfassend:
- eine Antenne (11) konfiguriert zur Herstellung einer elektromagnetischen Kopplung;
- ein Managementmodul (12), konfiguriert zur Modulation und Übertragung eines Eingangsignals (13) an diese Antenne (11) und zur Demodulation und Übertragung eines von dieser Antenne (11) empfangenen Ausgangsignals (14),
- ein Überwachungsorgan (15), konfiguriert zur Erzeugung dieses Eingangsignals (13) und zur Analyse dieses Ausgangsignals (14), so dass eine drahtlose Kommunikation organisiert wird,
- dieses Überwachungsorgan (15) enthält einen Schlafmodus (slp), konfiguriert zur Begrenzung des Energieverbrauchs, ein erstes Wecksignal (16), mit dem dieses Überwachungsorgan (15) den genannten Schlafmodus (slp) verlassen kann, und
- ein zweites Wecksignal (17), gesteuert durch eine Uhr (18), konfiguriert damit dieses Überwachungsorgan (15) in regelmäßigen Intervallen (dt2) diesen Schlafmodus verlässt,
**dadurch gekennzeichnet, dass** dieses Lesegerät mit elektromagnetischer Kopplung (10), in ein Fahrzeug integriert ist, bei dem die Türen zentral geöffnet werden können, dieses Managementmodul (12) umfasst außerdem:
- einen Energiesparmodus (LPCD), der darin besteht, in regelmäßigen Intervallen (dt1) eine Impedanz dieser Antenne (11) zu messen, um die Anwesenheit eines Peripheriegerätes zu erkennen, dass eine elektromagnetische Kopplung erlaubt, dieses erste Wecksignal (16) wird vom Managementmodul (12) aktiviert, wenn ein Peripheriegerät erkannt wird.

2. Lesegerät mit elektromagnetischer Kopplung nach Anspruch 1, bei dem die regelmäßigen Intervallen (dt2) dieses zweiten Wecksignals (17) länger sind als die genannten regelmäßigen Intervalle (dt1) dieses Energiesparmodus (LPCD).

3. Lesegerät mit elektromagnetischer Kopplung nach Anspruch 1 oder 2, bei dem diese regelmäßigen Intervalle (dt2) dieses zweiten Wecksignals (17) eine Periode von über 1s haben.

4. Lesegerät mit elektromagnetischer Kopplung nach irgendeinem der Ansprüche 1 bis 3, bei dem diese regelmäßigen Intervalle (dt2) dieses zweiten Wecksignals (17) eine Periode von im Wesentlichen gleich 2s haben.

5. Lesegerät mit elektromagnetischer Kopplung nach irgendeinem der Ansprüche 1 bis 4, bei dem dieser Energiesparmodus (LPCD) eine Warteperiode (Std) und eine Erkennungsperiode hat.

6. Lesegerät mit elektromagnetischer Kopplung nach Anspruch 5, bei dem diese Warteperiode (Std) zwischen 35 und 45 ms beträgt.

7. Lesegerät mit elektromagnetischer Kopplung nach Anspruch 5 oder 6, bei dem diese Warteperiode (Std) im Wesentlichen gleich 40 ms ist.

8. Lesegerät mit elektromagnetischer Kopplung nach irgendeinem der Ansprüche 5 bis 7, bei dem die Erkennungsperiode zwischen 50 und 150 µs beträgt.

9. Lesegerät mit elektromagnetischer Kopplung nach einem der Ansprüche 5 bis 8, bei dem diese Erkennungsperiode im Wesentlichen gleich 100 µs ist.

10. Lesegerät mit elektromagnetischer Kopplung nach einem der Ansprüche 1 bis 9, bei dem dieses Überwachungsorgan (15), das Protokoll NFC umsetzt.

## Claims

1. An electromagnetic coupling reader (10) comprising:
- an antenna (11) configured to perform the electromagnetic coupling,
- a management module (12) configured to modulate and transmit an input signal (13) on said antenna (11), and to demodulate and transmit an output signal (14) received by said antenna (11),
- a supervision unit (15) configured to generate said input signal (13) and analyze said output signal (14) in such a way as to organize a wireless communication,
- said supervision unit (15) comprising a sleep mode (Slp) configured to limit energy consumption, a first wake-up signal (16) enabling said supervision unit (15) to exit said sleep mode (Sip),
- a second wake-up signal (17) controlled by a clock (18) configured to extract said supervision unit (15) from said sleep mode at regular intervals (dt2),
**characterized in that** said electromagnetic coupling reader (10) is integrated to an automotive vehicule allowing the central opening of doors, said management module (12) further comprising :
- an energy saving mode (LPCD) consisting of measuring, at regular intervals (dt1), an impedance of said antenna (11) in order to detect the presence of a peripheral authorizing an electromagnetic coupling, said first wake-up signal (16) being activated by said management module (12) when a peripheral is detected.

2. The electromagnetic coupling reader according to claim 1, wherein said regular intervals (dt2) of said second wake-up signal (17) are greater than said regular intervals (dt1) of said energy saving mode (LPCD).

3. The electromagnetic coupling reader according to either of claims 1 or 2, wherein said regular intervals (dt2) of said second wake-up signal (17) have a period of more than 1 s.

4. The electromagnetic coupling reader according to any of claims 1 to 3, wherein said regular intervals (dt2) of said second wake-up signal (17) have a period substantially equal to 2 s.

5. The electromagnetic coupling reader according to any of claims 1 to 4, wherein said energy saving mode (LPCD) has a waiting period (Std) and a detection period.

6. The electromagnetic coupling reader according to claim 5, wherein said waiting period (Std) is between 35 and 45 ms.

7. The electromagnetic coupling reader according to claim 5 or 6, wherein said waiting period (Std) is substantially equal to 40 ms.

8. The electromagnetic coupling reader according to any of claims 5 to 7, wherein said detection period is between 50 and 150 µs.

9. The electromagnetic coupling reader according to any of claims 5 to 8, wherein said detection period is substantially equal to 100 µs.

10. The electromagnetic coupling reader according to any of claims 1 to 9, wherein said supervision unit (15) implements the NFC protocol.
